# EUROPEAN PATENT APPLICATION

(11) **EP 2 908 220 A1**
(43) Date of publication of application: **19.08.2015**
(21) Application number: 15153019.3
(22) Date of filing: 29.01.2015
(51) Int. Cl.: G06F 3/01, G06F 3/03

(54) **Gesture recognition device and method of controlling gesture recognition device**

(30) Priority: 14.02.2014 JP 2014027016
(71) Applicant: Omron Corporation, Kyoto-shi, Kyoto 600-8530 (JP)
(72) Inventor: Irie, Atsushi, Kyoto-shi, Kyoto 600-8530 (JP); Yamamoto, Motoo, Kyoto-shi, Kyoto 600-8530 (JP)
(74) Representative: Kilian Kilian & Partner

(57) **Abstract**

To prevent actions other than gestures from being falsely recognized as gestures by a gesture recognition device that recognizes gestures performed by a user.

A gesture recognition device that acquires a gesture performed by a user and generates a command corresponding to said gesture, includes: a gesture acquisition unit for acquiring a gesture performed by a user; a gaze tracking unit for acquiring the user's movement of gaze; a gaze pattern determination unit for determining whether the movement of gaze satisfies a prescribed pattern; a gesture selection unit selecting a valid gesture acceptable as input when the movement of gaze satisfies a prescribed pattern; and a command generating unit for generating a command corresponding to the acquired gesture only if said acquired gesture is a valid gesture. Thus, the gesture recognition device that recognizes gestures performed by a user can prevent actions other than gestures from being falsely recognized as gestures.

## Description

### BACKGROUND OF THE INVENTION

### Field of the Invention

The present invention relates to a gesture recognition device for recognizing operational input entered by way of a gesture.

### Description of the Related Art

Computer and electronic devices which use gestures as a means of input are becoming more popular. Through the use of gestures, inputs can be entered intuitively even on devices requiring complex manipulation to perform various functions. Additionally, the device can be manipulated even in cases where direct contact is unsuitable for operating the device; for instance, in cases where the users hands are shaking.

Generally, the gesture used to operate the device is an action a person may naturally perform; for instance "moving the hand in one direction". Accordingly, devices for recognizing gestures must be prevented from recognizing unintentional actions as gestures.

To solve this problem, Japanese Unexamined Patent Publication No.2000-163196 discloses a gesture recognition device configured to detect a user's gaze, and to only recognize a gesture when the detected gaze is at a location that accepts the gesture input. According to the input device, for example, the gesture is recognized only when the user is focused on the device that will perform the operation; recognition is not performed when the user is looking at an unrelated location. That is, the input device can prevent an action unrelated to a gesture from being recognized as a gesture.

### SUMMARY OF THE INVENTION

The invention described in Japanese Unexamined Patent Publication No.2000-163196 allows a gesture that should be recognized to change depending on the object on which a user focuses, therefore, the invention described in Japanese Unexamined Patent Publication No.2000-163196 can prevent the erroneous operation of devices not intended for operation when there are multiple of devices under control to carry out an operation.

However, if there is only one device under control that carries out operations and a plurality of gestures may be used with respect to said device, the occurrence of erroneous operations cannot be completely eliminated because all gestures are recognized as if the device were the object of focus.

Take for example, an electronic book reader; a system may detect that the user is focused on the screen of the electronic book reader, and enables the input of gestures to said reader. However, even if the operations are meant for the reader, there are cases where an unintentional action by the user is recognized as a gesture. For instance, when the user performs an action to turn to the next page and subsequently returns the hand to the previous position, this action may be mistakenly recognized as an action to turn to the previous page.

To overcome this issue, a gesture recognition device must predict what kind of action the user will perform next, and select to recognize only those gestures that can be considered as appropriate.

The present invention, created with the above mentioned issues in mind, provides a gesture recognition device for recognizing gestures performed by a user, wherein the gesture recognition device prevents unintended actions outside of the gestures a user intended to perform from being falsely recognized as gestures, and prevents the occurrence of erroneous operations caused by improper gesture recognition.

To solve this problem, a gesture recognition device according to the invention limits the gestures validated as input on the basis of the movement of a user's gaze.

More specifically, a gesture recognition device according to embodiments of the invention has the following features.

A gesture recognition device that acquires a gesture performed by a user and generates a command corresponding to said gesture, the gesture recognition device including: a gesture acquisition unit for acquiring a gesture performed by a user; a gaze tracking unit for acquiring the user's movement of gaze; a gaze pattern determination unit for determining whether the movement of gaze satisfies a prescribed pattern; a valid gesture storage unit for storing a gesture acceptable for input as a valid gesture; a gesture selection unit for causing a predetermined one or plurality of gestures to be stored in the valid gesture storage unit when the movement of gaze satisfies a prescribed pattern; and a command generating unit for generating a command corresponding to the acquired gesture only if said acquired gesture is a valid gesture.

The gesture recognition device according to the present invention acquires a gesture performed by the user, and generates a corresponding command. More specifically, the gesture recognition device acquires a movement or the shape of a body part as a gesture through a camera or input device that photographs the user; in addition to recognizing the gesture, the gesture recognition device then generates a command and the like for an external device.

The gesture tracking unit may track the user's movement of gaze. The movement of gaze may be a change in the direction of the user's gaze, or may be a change in the coordinates of a point on which the user is focusing (below, the "point of gaze").

The gaze pattern determination unit determines whether or not an acquired movement of gaze matches a prescribed pattern. The gesture selection unit determines a gesture acceptable for input (a valid gesture) on the basis of the results of the determination carried out by the gaze pattern determination unit, and stores the valid gesture in the valid gesture storage unit. A prescribed pattern may be any kind of pattern, so long as the prescribed pattern is based on the movement of gaze. For instance, the prescribed pattern may be a change in the location, the direction of the movement, the speed of the movement, or the duration of the point of gaze, or the like respectively of the point of gaze, or may be a combination of these.

In the gesture recognition device according to the present invention, a corresponding gesture is enabled only if the movement of gaze matches a prescribed pattern. According to this configuration, actions performed unintentionally are prevented from being falsely recognized as a gestures, and thus false operations caused by this kind of false recognition may also be prevented.

Furthermore, one or a plurality of gestures unrelated to the determinations made by the gaze pattern determination unit may be preliminarily stored in the valid gesture storage unit as gestures acceptable for input.

The gestures preliminarily stored in the valid gesture storage unit may include the results of determinations made by the gaze pattern determination unit, or maybe normally acceptable inputs having no relation to whether or not a determination is made. In this manner, a portion of gestures may be normally validated as input, while another portion of gestures are enabled only if the movement of gaze matches a prescribed pattern; thus it is possible to both provide convenience and prevent false input. Moreover, preliminarily stored gestures, and gestures enabled when the movement of gaze matches a prescribed pattern, may include a plurality of gestures. In addition, there may be a plurality of patterns for the movement of gaze, and combinations gestures that are enabled.

The gaze pattern determination unit may be configured to determine that a prescribed pattern is satisfied when the user has focused on all of a plurality of points of interest that should be focused on.

The gaze pattern determination unit may be configured to determine that a prescribed pattern is satisfied when the duration of the user's point of gaze on all of a plurality of points of interest that should be focused is greater than or equal to a prescribed time.

In this manner, a corresponding gesture may be validated when it is determined that the user has focused on the point of interest that should be focused on. For example, when the gesture recognition device according to the present invention is adopted in a computer used to control a production line, the system may be configured such that a gesture for moving to the next process is validated only if a user visually verifies all the items displayed. An object that a user should focus on may be an object related to a controlled device or an object not directly related to the controlled device.

The determination of whether or not an object was focused on is preferably made using the duration of the point of gaze.

The gaze pattern determination unit may be configured to determine that a prescribed pattern is satisfied when the displacement of the user's point of gaze on an object with which the user makes visual contact is greater than a prescribed value.

That is, the gaze pattern determination unit may be configured such that a corresponding gesture is validated only if the gaze pattern determination unit can determine that the user made adequate visual contact with the object. If the object is something to be followed with the eyes, then the gaze pattern determination may make the determination using the displacement of the point of gaze.

The gaze pattern determination unit may be configured to determine that a prescribed pattern is satisfied when the user's point of gaze moves along a predetermined trajectory.

Similarly, if the object is a text, the gaze pattern determination unit may estimate whether or not the user has made adequate visual contact by comparing the movement of the point of gaze to a prescribed trajectory.

The gaze pattern determination unit may be configured to determine that a prescribed pattern is satisfied when the gaze pattern determination unit determines a region within the object with which the user makes visual contact, and determines that the proportion of said region in relation to the object as a whole is greater than a prescribed proportion.

In this manner, by determining the proportion of the region in relation to the object as a whole, the gaze pattern determination unit may determine whether or not the user has made adequate visual contact with the object. This method of determination is preferable if the is object is a means of providing an overview of the entire information, such as a web page.

The gaze pattern determination unit may be configured to determine that a prescribed pattern is satisfied when the gaze pattern determination unit acquires the duration of the user's point of gaze on the points of interest with which the user makes visual contact, and determines that the maximum duration of the point of gaze does not exceed a threshold during a prescribed time.

In this manner, the gaze pattern determination unit may determine that the prescribed pattern is satisfied when the location of the user's point of gaze cannot be ascertained. A short duration of the point of gaze means that the user has not found the desired information. In this case, one way to deal with this issue would be to enable a gesture used to provide the user with the desired information.

Finally, the present invention may be seen as a gesture recognition device including at least a portion of the above mentioned means. The present invention may also be seen as a method of controlling said gesture recognition device, a program for operating said gesture recognition device, or as a recordable storage medium storing said program. The above mentioned processes and means may be freely combined insofar as is technically possible.

### Effects

According to the present invention, a gesture recognition device that recognizes gestures performed by a user, prevents unintended actions outside of the gestures a user intended to perform from being falsely recognized as gestures, and prevents the occurrence of erroneous operations caused by improper gesture recognition.

### BRIEF DESCRIPTION OF THE DRAWINGS

FIG. 1 is a configuration diagram of a gesture recognition system according to a first embodiment;
FIG. 2 is a diagram for explaining the relationship between the gesture recognition device and a device under control;
FIG. 3 is a diagram for explaining the locations on which the user must focus for substrates being inspected;
FIGS. 4A and 4B illustrate one example of a gaze pattern determination table in the first embodiment;
FIG. 5 illustrates one example of a gesture definition table in the first embodiment;
FIG. 6 is a flowchart illustrating the processes of gaze pattern extraction, and gesture validation;
FIG. 7 is a flowchart illustrating the process of gesture recognition;
FIG. 8 illustrates one example of a gaze pattern determination table in a second embodiment;
FIG. 9 is a diagram for explaining the conditions used for indicating the completion of reading a page in the second embodiment;
FIGS. 10A and 10B are diagrams for explaining the conditions used for indicating the completion of reading a page in the second embodiment;
FIG. 11 illustrates one example of a gesture definition table in the second embodiment;
FIG. 12 illustrates one example of a gaze pattern determination table in a third embodiment;
FIG. 13 illustrates one example of a gesture definition table in the third embodiment;

### DESCRIPTION OF THE EMBODIMENTS

### First Embodiment

### System Configuration

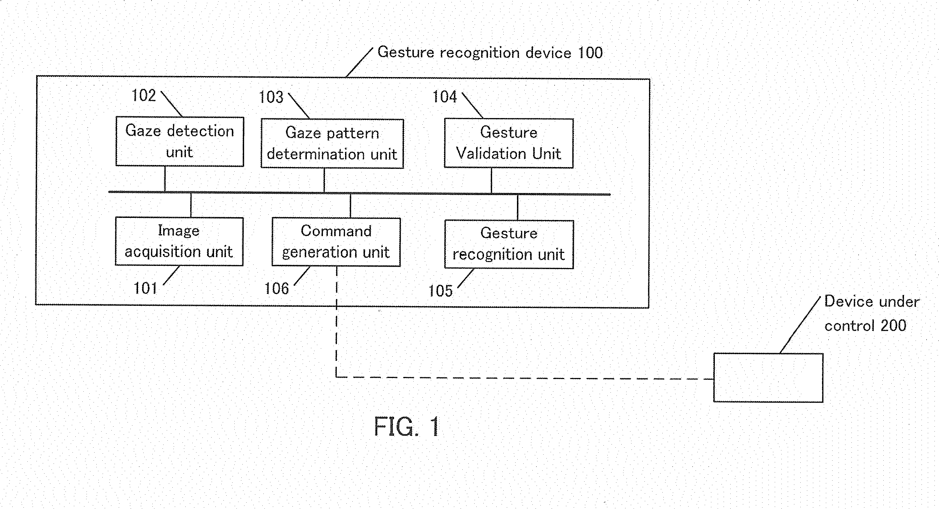

The general details of a gesture recognition system according to a first embodiment is described with reference to FIG. 1; FIG. 1 illustrates a configuration diagram of the system. The gesture recognition system according to the first embodiment is constituted by a gesture recognition device 100 and a device under control 200.

The gesture recognition device 100 recognizes a gesture performed by a user through a camera, generates a command corresponding to the gesture in question, and transmits the command to the device under control 200.

The device under control 200 is a control object that receives and processes the command transmitted from the gesture recognition device; typically, the device under control 200 may be an electronic appliance such as a television, a video recorder, a computer, an air conditioner, or a video conferencing system. As long as the device under control 200 is capable of receiving commands from the gesture recognition device 100 through wire, or wirelessly, any kind of device may be used.

In the first embodiment, the device under control 200 is a computer used for managing a circuit board inspection line, and is referred to below as an inspection control device 200.

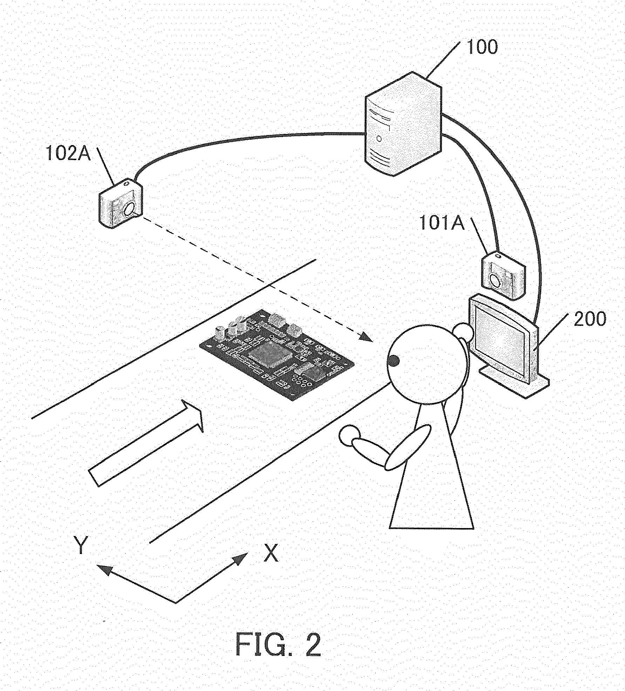

Before describing the devices in detail, the relationship between the gesture recognition device 100 and the inspection control device 200 in the first embodiment will be briefly described with reference to FIG. 2.

On an inspection line according to the first embodiment, an inspector performs inspections by visually inspecting substrates conveyed down the line; in addition to determining pass or fail for good or defective substrates, the inspector enters the determination results into the inspection control device 200. The gesture recognition device 100 according to the present embodiment allows an input to the inspection control device 200 to be made via gesture.

More specifically, in addition to visually inspecting a substrate, the inspector performs a gesture indicating the pass or fail of the substrate being inspected, and the inspection control device 200 carries out processing on the basis of said gesture. For instance, if the inspector performs a gesture indicating that a substrate being inspected has passed the inspection, the inspection control device 200 registers an inspection result indicating the pass, and stores the substrate in a container for good products. If the inspector performs a gesture indicating that a substrate being inspected has failed the inspection, the inspection control device 200 registers the inspection result indicating the fail and stores the substrate in a container for defective products.

A configuration of the gesture recognition device 100 is described referring again to FIG. 1. The gesture recognition device 100 includes an image acquisition unit 101, a gaze detection unit 102, a gaze pattern determination unit 103, a gesture validation unit 104, a gesture recognition unit 105, and a command generating unit 106.

The image acquisition unit 101 acquires images. In the present embodiment, an area in front of the inspector is photographed using a camera 101A installed at a corner near the inspector. The camera 101A may be a camera capable of acquiring an RGB image, a grayscale image, or an infrared image. There is no requirement that an image is acquired using a camera. For instance, an image indicating a distance distribution generated by a distance sensor (distance image) may also be used. A combination of a distance sensor and a camera, and the like may also be used. The image (below, camera image) acquired by the image acquisition unit 101 may be any kind of image as long as the gesture performed by the user can be obtained.

The gaze estimation unit 102 estimates the direction of the user's gaze to identify the object on which a user is focused. The direction of gaze is acquired by, for instance, photographing an image of the user's face from the front using an infrared camera 102A, and detecting corneal reflections and the locations of the pupils. The point at which the user is focused (point of gaze) may also be identified on the basis of the acquired direction of gaze.

Moreover, the point of gaze is represented using a coordinate system where the user is the center (below, user-based coordinate system). In the example illustrated in FIG. 2, in a user-based coordinate system represented by an X axis and a Y-axis, it is possible to identify where a user's gaze is fixated on the substrate.

The gaze pattern determination unit 103 acquires a user's change in gaze (i.e., a change in the location of the point of gaze), and determines whether or not the change matches a predetermined pattern. For instance, a pattern such as "looking continuously at region A and region B" is stored, and the gaze pattern determination unit 103 determines whether the acquired change in gaze matches the set pattern. This kind of pattern representing a movement of the point of gaze is called a gaze pattern. A more specific example is described later.

The gesture validation unit 104, determines a gesture that will be validated for input (below, valid gesture) on the basis of said gaze pattern when a gaze pattern is extracted by the gaze pattern determination unit 103. The information regarding the valid gesture is shared with the gesture recognition unit 105.

The gesture recognition unit 105 identifies an inputted gesture on the basis of a camera image acquired by the image acquisition unit 101. More specifically, the gesture recognition unit 105 detects the parts of the body carrying out the gesture (below, active body part), and in addition to establishing a representative point representing a position on said active body part, tracks the movement of the representative point. Hereby, the movement expressing the gesture may be extracted. The gesture recognition unit 105 also stores data mapping the movement of the representative point and the description of the gesture; the gesture recognition unit 105 identifies the description of the gesture on the basis of the movement of the representative point that was extracted. While the present embodiment provides examples identifying descriptions of gestures on the basis of the movement of active body parts, the gesture recognition unit 105 may identify the description of the gesture on the basis of the shape of the active body part. For example, if the active body part is a human hand, the gesture recognition unit 105 may identify the description of the gesture on the basis of the number of fingers that are up. Techniques for recognizing these gestures are well known and thus an explanation thereof will be omitted.

The command generation unit 106 generates a command corresponding to a gesture identified by the gesture recognition unit 105. A command is a signal used for controlling the inspection control device 200. More specifically, a command may be an electrical signal, a wirelessly modulated signal, or a pulse modulated infrared signal.

The gesture recognition device 100 is a computer provided with a processor, a main storage device, and an auxiliary storage device. The program stored in the auxiliary storage device is loaded into the main storage device and executed by the processor to thereby operate the previously described units (the processor, the main storage device, and the auxiliary storage device are not shown).

### Validating or Invalidating Gestures based on the Gaze

Next, a method of validating or invalidating a gesture on the basis of the movement of a user's gaze is described in detail.

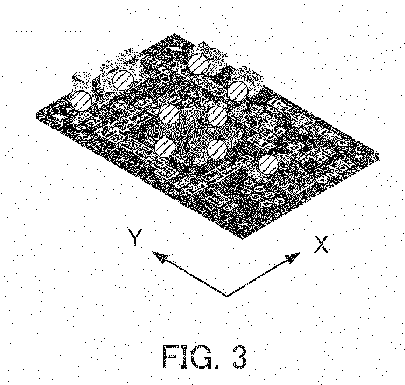

FIG. 3 illustrates a substrate that the user inspects. The user visually inspects the regions (nine in total) represented by the hatched circles and enters the results (whether pass or fail) to the inspection control device 200 via gestures.

The problem arising at this point is that a conventional gesture recognition device would recognize an action that is not a gesture (namely, an action the user performed unintentionally) as a gesture. For example, if a gesture of "moving the left hand downward" exists, which indicates that "the object failed inspection", then there are cases where the conventional gesture recognition device would process the user lowering a raised arm as input of the inspection result regardless of whether an inspection was taking place.

To prevent this disadvantageous process, the gesture recognition device should be given a function that "enable a gesture only if an inspection was completed".

The invention disclosed in Japanese Unexamined Patent Publication No.2000-163196 only enables input of a gesture if an object is in focus; however, the aforementioned device cannot determine whether or not an inspection was completed.

Therefore, the gesture recognition device according to the present embodiment estimates the user's movement of gaze and carries out pattern matching and validates a gesture for inputting an inspection result only if a gaze pattern is matched, representing that "all locations for inspection have been visually verified". More specifically, if even one of the nine locations to be checked illustrated in FIG. 3 is not visually verified, the gesture recognition device is configured to not process a gesture even if the gesture for inputting an inspection result is performed.

First, the processing executed by the gaze pattern determination unit 103 is described.

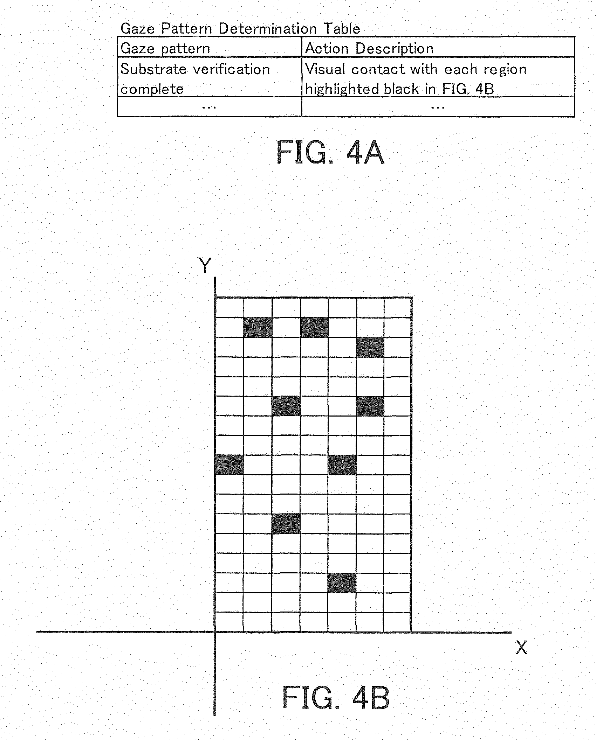

FIG. 4A is an example of a table used for mapping a movement of gaze and a gaze pattern (below, gaze pattern determination table). When the user's point of gaze fulfills a certain fixed movement, that movement may classified into different patterns using gaze pattern determination table.

FIG. 4B illustrates representation of the location of the point of gaze on the user coordinate system. The black squares correspond to locations that must be checked on the substrate being inspected.

The gaze pattern determination unit 103 acquires the direction of the user's gaze via the gaze estimation unit 102, and in addition to identifying the point of gaze, extracts a gaze pattern representing "substrate check complete" if the user visually confirms all nine defined regions. In other cases, the gaze pattern determination unit 103 outputs "no matching pattern". Note that visual verification may be defined as, for instance, the duration of the point of gaze in each region for a prescribed time (e.g., one second), or more.

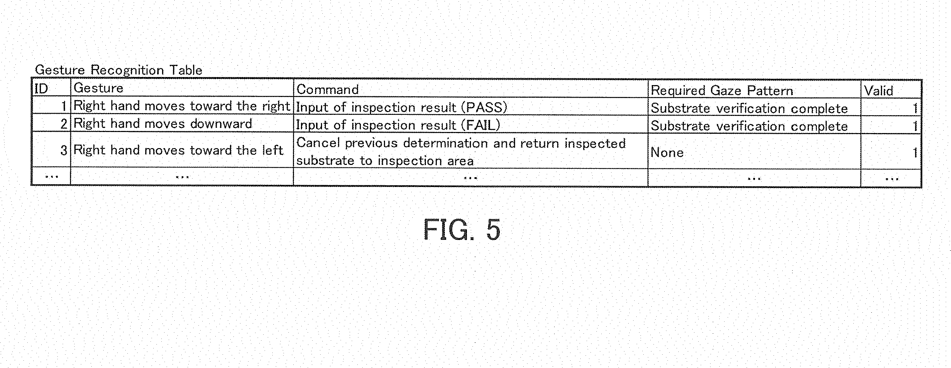

The table used for defining gestures (gesture definition table) is described. FIG. 5 illustrates an example of a gesture definition table according to the present embodiment. The gesture definition table stores a mapping of a description of a gesture, a corresponding command, and the gaze pattern required for the gesture to be accepted. Information on whether or not the gesture is valid is also included. The gesture validation unit 104 and the gesture recognition unit 105 share the gesture definition table.

In the present example each field is given a textual description; however, the gesture definition table may be represented by feature values used to recognize a gesture, or data examples of a command to be generated.

Next, the processing executed by the gesture validation unit 104 is described.

The gesture validation unit 104 extracts a gesture mapped to a gaze pattern identified by the gaze pattern determination unit 103 from the gesture definition table, and sets the gesture is a valid gesture. For example, when a gaze pattern, "substrate check complete", is extracted, the corresponding gesture may be of three different types: "1: Right hand moves to the right", "2: Right hand moves down", "3: Right hand moves to the left". In other words, the three gestures become gestures validated for input (valid gestures), and the value in "Valid" column corresponding to the three gestures is set to '1'. Moreover, if a matching gaze pattern is not extracted, only one type of gesture, "3: Right hand moves to the left" is set as a valid gesture.

The gesture recognition unit 105 recognizes a gesture on the basis of the gesture definition table, and the image acquired by the image acquisition unit 101, and transmits the recognized gesture to the command generation unit 106. At this point, if a gesture other than a valid gesture established by the gesture validation unit 104 is entered, the gesture is not transmitted. That is, the command generation unit 106 generates a corresponding command only when a valid gesture is entered.

For example, if the gesture "1: Right hand moves to the right" is validated, and the gesture is entered, then a command representing "Inspection result input (Pass)" is transmitted to the inspection control device 200. If the user moves the right hand to the right when the gesture is not validated, then the gesture is not processed and no command is output. The determination of whether or not the gesture is validated can be confirmed by referencing the value of the "Valid" column in the gesture definition table.

### Process Flowchart

Next, the processing executed to implement the above described functions is explained.

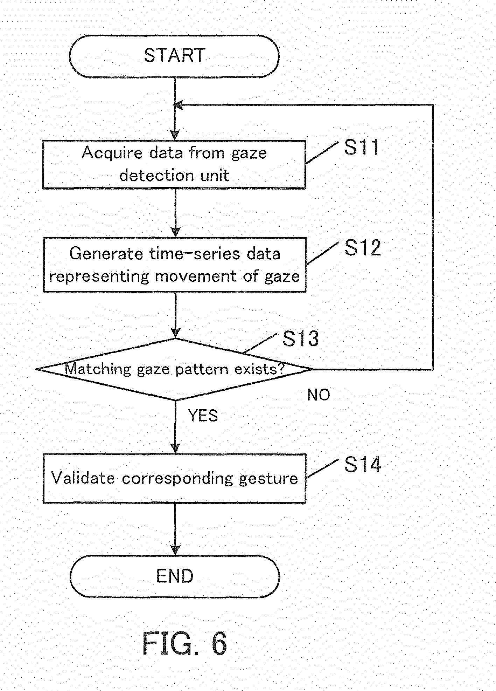

FIG. 6 is a flowchart illustrating the processes of gaze pattern extraction, and gesture validation. The processing commences once the gesture recognition device 100 is powered on, and executes repeatedly for a prescribed interval. Additionally, the device may be configured such that the processing is only performed when the device recognizes a user's presence.

First, in step S11, the gaze pattern determination unit 103 acquires the user's point of gaze using the gaze estimation unit 102. In this step, the gaze pattern determination unit 103 acquires an infrared image of the user with an infrared camera provided in front of the user, acquires the direction of the user's gaze, and calculates the user's point of gaze within the user-based coordinate system.

Next, in step S12, the gaze pattern determination unit 103 adds the coordinates of the acquired point of gaze to chronological data representing the movement of the point of gaze. The chronological data may be configured as a queue where the data (point of gaze coordinates) therein that is older than a fixed time is deleted from the queue in chronological order.

In step S13, the gaze pattern determination unit 103 references the chronological data and the gaze pattern determination table, to determine whether or not there is a matching gaze pattern. If there is a matching gaze pattern, the pattern is selected, and the processing transitions to step S 14. If there is no matching gaze pattern, the processing returns to step S11.

Next, in step S 14, the gesture validation unit 104 references the gesture definition table, and extracts a gesture corresponding to the selected gaze pattern. At this point the extracted gesture becomes a valid gesture, and the "Valid" column corresponding to the extracted gesture is set to 1'.

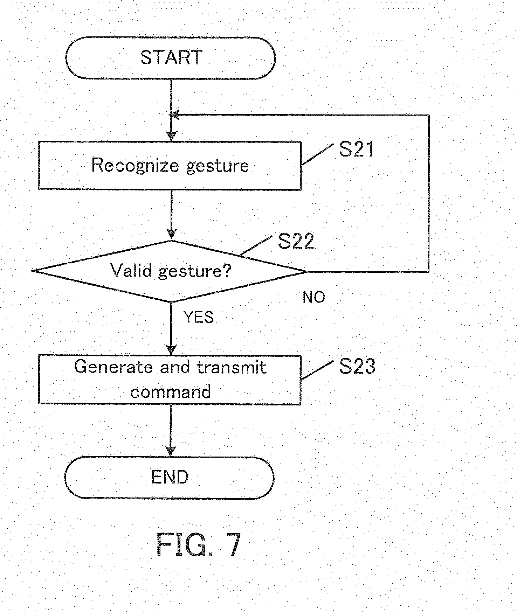

FIG. 7 is a flowchart illustrating the process of gesture recognition. The gesture recognition process starts at the same time as the processing illustrated in FIG. 6 and is periodically executed.

In step S21, the gesture recognition unit 105 carries out gesture recognition. More specifically, the gesture recognition unit 105 acquires a camera image from the image acquisition unit 101, detects the active body part that is carrying out the gesture (e.g., the right hand), and acquires the coordinates of a representative point therefor. The gesture recognition unit 105 then recognizes the gesture on the basis of changes in the coordinates of the acquired representative point. For instance, in a case where gestures are defined in the gesture definition table illustrated in FIG. 5, when the gesture recognition unit 105 detects that the coordinates of the representative point set for the right hand moves to the right, the gesture recognition unit 105 determines that a gesture representing "Inspection result input (Pass)" was performed.

Next, in step S22, the gesture recognition unit 105 determines whether or not the gesture acquired in step S21 is included among the valid gestures at that point in time. More specifically, the gesture recognition device 105 browses the gesture recognition table for the acquired gesture, and then references the "Valid" column corresponding to the gesture when the gesture exists in the gesture definition table. As a result, if the acquired gesture is included among the valid gestures, (in other words, the acquired gesture exists in the gesture definition table, and, the corresponding "Valid" column value is '1'), then the gesture recognition device unit 105 transmits the gesture to the command generation unit 106, and the processing transitions to step S23. In all other cases, the acquired gesture is discarded, and the processing returns to step S21.

Next, in step S23, the command generation unit 106 generates a command corresponding to the recognized gesture, and transmits the command to the inspection control device 200. In the previously described example, for instance, a command representing "Inspection result input (Pass)" is generated and transmitted. It can be noted that, once the command is generated and sent, the command generation unit 106 may be configured to reset the valid gestures, and revoke the validity of the gesture extracted in step S14 (i.e., set the "Valid" column value to '0'). Additionally, the gesture recognition device may be configured such that the validity of the gestures set as valid gestures is revoked after the valid gestures have been set in step S 14 and no gestures are input after a fixed time.

As above described, a gesture recognition device according to the first embodiment validates gestures for input on the basis of the user's movement of gaze, and gestures other than the validated gestures are not processed even if detected. Hereby, it is possible to prevent actions having nothing to do with a gesture from being falsely recognized as a gesture. It is also possible to prevent the erroneous operations caused by this kind of false recognition.

### Second Embodiment

In the first embodiment, the input of a corresponding gesture is validated when a user visually verifies all of a plurality of predetermined regions. In contrast, in the second embodiment, the input of a corresponding gesture is permitted when a user has read all the content presented on a screen. The configuration of the gesture recognition system according to the second embodiment is the same as the first embodiment except for the features described below.

In the second embodiment, the device under control 200 is a tablet electronic book reader capable of displaying electronic books and pictures on the display screen. The device under control possesses functions for being operated (e.g., page turning operations) using gestures. Additionally, the gesture recognition device 100 combined with the device under control 200 is implemented as a program executed on the device.

The processing executed in the gesture recognition device 100 according to the second embodiment is the same as the processing illustrated in FIG. 6 and FIG. 7, however, the conditions for determining the gaze pattern are different.

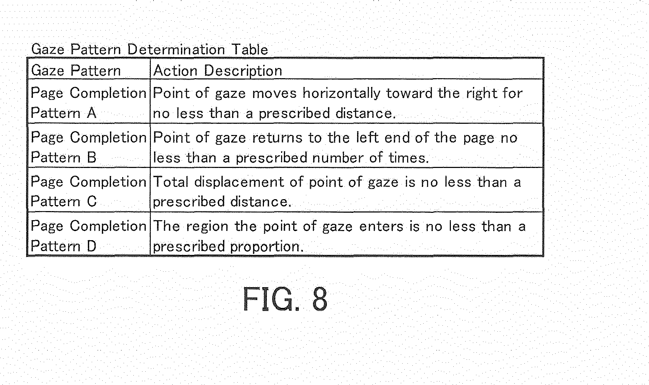

FIG. 8 is an example of a gaze pattern determination table in the second embodiment. In the second embodiment, the gaze pattern "Page completion" is extracted when a page written from side to side is displayed on the screen, and the system determines that the user has read the entire page. Whether or not the user has read the entire page may be determined by various methods, however in the present example, four methods are described below. The corresponding gaze patterns are treated as "Page Completion Pattern (A)" through "Page Completion Pattern (D)".

### (1) Assessment based on Horizontal Displacement of the Point of Gaze

If the electronic book is a document written from side to side, for example, and the average length of a line of text is 500 pixels, the number of lines the user has read may be estimated by acquiring the horizontal displacement (pixels) of the point of gaze, and dividing the displacement by 500. In this example, if 90% or more of the text displayed (number of lines) is read, for instance, this may be treated as a "Page Completion".

### (2) Assessment based on the number of times the Point of Gaze returns to the Left Edge

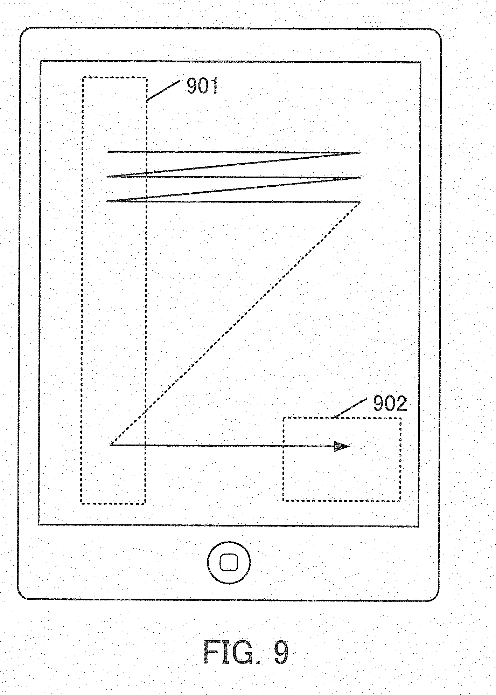

When the point of gaze at the left edge moves to the right edge and thereafter returns to the left edge, this may be presumed to mean a line of text has been read and the next line has been started. Thus, the completion of a page may be assessed on the basis of the number of times the point of gaze returned to the left edge. For instance, in FIG. 9 the point of gaze is to the right of a region 901; a counter is increased when the point of gaze enters the region 901, and the counter exceeding a prescribed value (a value set on the basis of the number of line breaks on the page) may be treated as the completion of the page.

If the text is in a language that is not read from left to right such as Arabic, the left-to-right determination may be reversed. Similarly, if the text displayed is written vertically, the determination of a complete reading of the page may be made on the basis of the vertical displacement of the point of gaze and not the horizontal displacement.

### (3) Assessment based on Total Displacement of the Point of Gaze

If the content being displayed is a comic or a picture thumbnail, then the determination of the completion of reading a page may be made on the basis of the total displacement of the point of gaze. For example, when the content is a comic, the sum of the distances between the centers of the frames on a page may be taken as a threshold value, and a displacement of the point of gaze greater than the threshold may be treated as a completion of the page.

### (4) Assessment based on the Proportion of the Region the Point of Gaze Enters

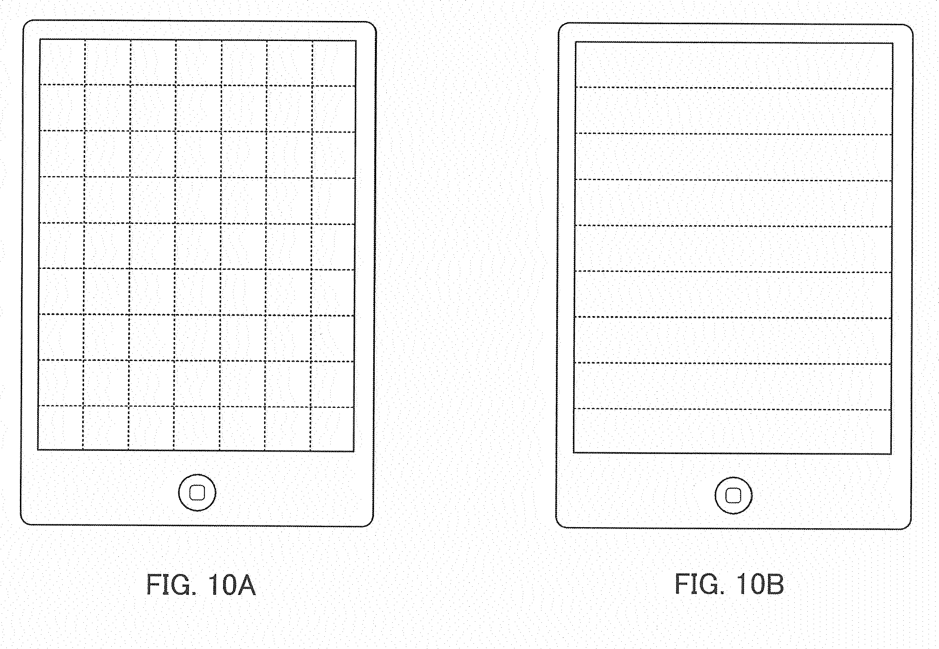

The gaze pattern determination unit 103 may divide the screen into a plurality of regions and calculates the proportion of regions in which the point of gaze entered versus the regions in which the point of gaze did not enter to determine the completion of a page. For example, the page area may be divided as illustrated in FIG. 10A; a ratio is calculated of the regions in which the point of gaze entered once in relation to the regions in which the point of gaze did not enter even once. If the ratio exceeds a threshold, then this may be treated as the completion of the page. The divided regions need not be rectangles; the regions may also be divided lengthwise as illustrated in FIG. 10B. If the page area is partitioned as illustrated in FIG. 10B, the determination of the page completion may be made on the basis of the movement of gaze in the vertical direction. Additionally, if the content displayed is a comic, each frame itself may be established as a respective divided region.

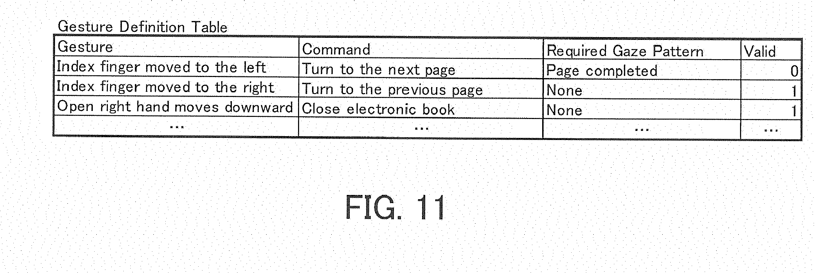

In the second embodiment, the page completion is determined in the above described manner, and valid gestures are established. FIG. 11 illustrates an example of the gesture recognition table in the second embodiment. More specifically, when the "page completion" is determined, a gesture for turning to the next page is added as a valid gesture (i.e., the "Valid" column value is set to '1' for the corresponding gesture). In all other cases, the gesture for turning to the previous page, or the gesture for closing the electronic book are the only two gestures established as valid gestures where the "Valid" column value is set to '1' for these corresponding gestures.

The gesture recognition device of the second embodiment determines the extent of information that the user has read of the information presented on the screen, and establishes a valid gesture. Hereby, unintentional page turns caused by the false recognition of a gesture may be prevented.

In the explanation of the second embodiment, four patterns for determining the completed reading of the page were presented. However, any other method may be used as long as the method allows determining that the page has been completely read on the basis of the movement of gaze. For example, in addition to the conditions described, "the final location of the point of gaze is at the bottom right" (within region 902 in FIG. 9) may be added as a page completion pattern.

Furthermore, the resting and the movement of the point of gaze that is greater than or equal to a prescribed number of times may be treated as a page completion. The trajectory along which the point of gaze moves and a predetermined trajectory may be compared such that a degree of matching that is greater than or equal to a prescribed value may be treated as a page completion. Finally, if tracking the trajectory of the point of gaze, movements clearly having no relation thereto may be disregarded.

### Third Embodiment

The second embodiment determines whether or not the user has completed reading contents displayed on a screen. In contrast, the third embodiment detects that the contents the user desires is not present on the screen, and permits a corresponding gesture.

The gesture recognition system according to the third embodiment is configured similarly to the second embodiment, however the gaze pattern determination conditions are different.

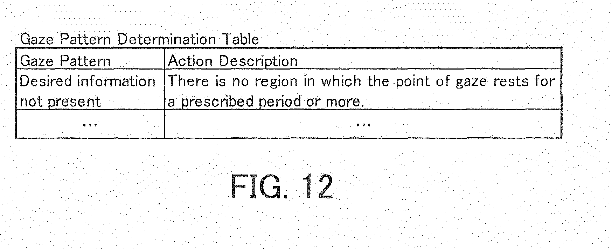

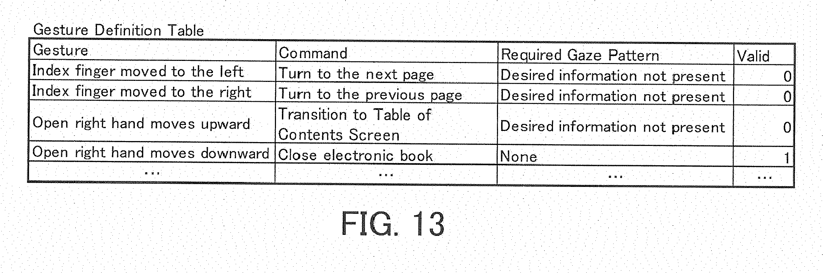

FIG. 12 is an example of the gaze pattern determination table in the third embodiment. In the third embodiment, a screen is partitioned into a plurality of regions similarly to FIG. 10A. If within a prescribed time (e.g., 10 seconds), there is no region that the point of gaze remains for more than a prescribed time, the gesture recognition device extracts a gaze pattern of "desired information not present". If the point of gaze does not stop at one location, the information the user desires is not present on the screen, and therefore as illustrated in FIG. 13, a gesture for executing an information search is set as a valid gesture (e.g., a gesture for moving to a search or table of contents screen; or a gesture for moving to the next page or the previous page).

Therefore, the third embodiment determines that the information the user desires is not present on the screen, and sets a valid gesture. Hereby, unintentional page movement caused by the false recognition of a gesture may be prevented.

### Modification Examples

The embodiments described herein are merely examples presented in order to explain the present invention. The present invention may be appropriately modified or combined in so far as said modifications or combinations are within the spirit and scope of the invention.

For example, in the embodiments described, a "Valid" column is provided in the gesture recognition table; referencing the column to determine if the value is '1' or '0' makes it possible to determine whether or not the corresponding gesture is valid. However, a table storing only information on valid gestures may be separately provided, and the gesture validation unit may be configured to add or remove gesture information to and from the table. The gesture validation unit may thus reference the table to determine whether or not the gesture is valid.

Additionally, in the first and second embodiments, a gesture is validated under the condition that the user visually verifies an object, however if the order in which the user must visually verify the objects is specified, then the gesture may be validated on the basis of the order in which the objects were visually verified.

In the embodiments described, the gesture recognition device is adapted in an inspection control device and an electronic book reader. However, a gesture recognition device according to the present invention may be adopted in any kind of system or device where, in addition to visually observing an object the user performs an action through a gesture. For example, the gesture recognition device may be adopted in an automotive device or a personal computer.

In the second and third embodiments, the screen of an electronic book reader is provided as an example of an object with which the user makes visual contact, however the object the user observes may be something other than a screen. For example, for the inspection line described in relation to the first embodiment, if the inspector's point of gaze does not stop at one location, the gesture recognition device may estimate that the inspector does not know the inspection method and may add a gesture for displaying a manual as a valid gesture.

Finally, the gesture recognition device may be configured, when the valid gestures change, to notify the user to that effect, or to provide the user with a list of validated gestures.

### LIST OF REFERENCE NUMERALS

- 100: Gesture recognition unit
- 101: Image acquisition unit
- 102: Gaze detection unit
- 103: Gaze pattern determination unit
- 104: Gesture validation unit
- 105: Gesture recognition unit
- 106: Command generation unit
- 200: Device under control

## Claims

1. A gesture recognition device that acquires a gesture performed by a user and generates a command corresponding to the gesture, the gesture recognition device comprising:
a gesture acquisition unit for acquiring a gesture performed by a user;
a gaze tracking unit for acquiring a user's movement of gaze;
a gaze pattern determination unit for determining whether the movement of gaze matches a prescribed pattern;
a valid gesture storage unit for storing a gesture acceptable as input as a valid gesture;
a gesture selection unit for causing a predetermined one or plurality of gestures to be stored in the valid gesture storage unit when the movement of gaze matches the prescribed pattern; and
a command generation unit for generating a command corresponding to the acquired gesture only if said acquired gesture is a valid gesture.

2. The gesture recognition device according to claim 1 wherein the valid gesture storage unit stores one or a plurality of gestures unrelated to the determination made by the gaze pattern determination unit as gestures acceptable for input.

3. The gesture recognition device according to claim 1 or 2 wherein the gaze pattern determination unit determines that a prescribed pattern is satisfied when the user has focused on all of a plurality of points of interest that should be focused on.

4. The gesture recognition device according to claim 3 wherein the gaze pattern determination unit determines that a prescribed pattern is satisfied when the duration of the user's point of gaze on all of a plurality of points of interest that should be focused is greater than or equal to a prescribed time.

5. The gesture recognition device according to claim 1 or 2 wherein the gaze pattern determination unit determines that a prescribed pattern is satisfied when the displacement of the user's point of gaze on an object with which the user makes visual contact is greater than a prescribed value.

6. The gesture recognition device according to claims 1 or 2 wherein the gaze pattern determination unit determines that a prescribed pattern is satisfied when the user's point of gaze moves along a predetermined trajectory.

7. The gesture recognition device according to claim 1 or 2 wherein the gaze pattern determination unit determines that a prescribed pattern is satisfied when the gaze pattern determination unit determines a region within the object with which the user makes visual contact, and determines that the proportion of said region in relation to the object as a whole is greater than a prescribed proportion.

8. The gesture recognition device according to claim 1 or 2 wherein the gaze pattern determination unit determines that a prescribed pattern is satisfied when the gaze pattern determination unit acquires the duration of the user's point of gaze on the points of interest with which the user makes visual contact, and determines that the maximum duration of the point of gaze does not exceed a threshold during a prescribed time.

9. A method of controlling a gesture recognition device that acquires a gesture performed by a user and generates a command corresponding to the gesture, the method of control comprising:
a gesture acquisition step of acquiring a gesture performed by a user;
a gaze tracking step of acquiring a user's movement of gaze;
a gaze pattern determination step for determining whether the movement of gaze matches a prescribed pattern;
a gesture selection step for causing a predetermined one or plurality of gestures to be stored in the valid gesture storage unit as valid gestures acceptable for input when the movement of gaze matches the prescribed pattern; and
a command generation step for generating a command corresponding to the acquired gesture only if said acquired gesture is a valid gesture.

10. A program for executing each step in the method for controlling a gesture recognition device according to claim 9 on a computer.
